# EUROPÄISCHE PATENTSCHRIFT

(11) **EP 0 622 309 B1**
(45) Veröffentlichungstag und Bekanntmachung des Hinweises auf die Patenterteilung: **11.02.1998**
(21) Anmeldenummer: 93106713.6
(22) Anmeldetag: 26.04.1993
(51) Int. Cl.: B65D 81/34, B65D 81/38, B65D 21/02, A47G 23/04

(54) **Transportbehälter mit Deckel und Speisenträger zum Transport vorbereiteter Speisen**
Container with cover and foodbox to transport previously prepared foods
Récipient avec couvercle et boîte pour l'emballage d'aliments, pour le transport des aliments préparés.

(43) Veröffentlichungstag der Anmeldung: 02.11.1994
(73) Patentinhaber: Lengsfeld Rhön Porzellan GmbH, 36457 Stadtlengsfeld/Rhön (DE); VERTRIEB FÜR HANDELSWARE GmbH, 29356 Bröckel (DE)
(72) Erfinder: Käppeli, Robert, CH-7265 Davos Wofganga (CH); Vehse, Lothar, D-30916 Isernhagen (DE); Rathke, Bernd, D-36547 Stadtlengsfeld (DE); Kolaska, Karl-Heinz, D-74245 Löwenstein (DE); Kersten, Wolfgang, D-06493 Dankerode (DE)
(74) Vertreter: Zieger, Sieglinde, Dipl.-Chem. Patentanwältin

(56) Entgegenhaltungen:
- DE-A- 2 045 045
- DE-A- 2 704 491
- DE-A- 3 404 798
- FR-A- 2 249 638
- FR-A- 2 291 918
- GB-A- 1 501 301
- US-A- 5 016 756

## Beschreibung

Die Erfindung bezieht sich auf einen stapelbaren eckigen Transportbehälter mit Deckel zur Aufnahme von einem oder mehreren Speisenträgern für sowohl warme als auch kalte vorbereitete Speisen. Der Transportbehälter ist sowohl vertikal als auch horizontal rutschsicher stapelbar und zur Aufnahme runder oder eckiger Speisenträger gleich gut geeignet.

Stapelbare eckige Behälter zum Transport gegarter warmer Speisen sind bekannt. Der Erfindung nahe stehen bekannte Lösungen wie FR-A-2 249 638, mit ineinander gestapelten runden Speisebehältern, die in einem rundem Transportbehälter angeordnet sind. Aber auch Lösungen, die das Problem des gleichzeitigen Transportes von vorbereiteten warmen und kalten Speisen in einem Behälter lösen, indem die Speisenbehälter voneinander unter dem Aspekt der Mikrowellenerwärmbarkeit isoliert werden. Derartige Lösungen sind Gegenstand der DE-A-27 04 491 und FR-A-2 291 918. US-A-5 016 756 offenbart umfangreich den gleichzeitigen Transport mehrerer Speisenbehälter in einem Sammelbehälter, wobei die Speisenbehälter einen separaten Deckel haben und nebeneinander angeordnet sind. Der Sammelbehälter wird mit einem einrastenden Deckel geschlossen. Dieses Dokument zeigt somit einen Transportbehälter gemäß dem Oberbegriff des Anspruchs 1.

GB-A-1 501 301 offenbart eine Lösung, in der runde und eckige Speisenbehälter transportiert werden können, wobei der gleichzeitige Transport von Tassen und deren Sicherung mittels Rillen- und Rippenzusammenspiel am Rand des Transportbehälters die wesentlichen Merkmale sind. DE-A-34 04 798 offenbart die rutschfeste Verbindung kastenförmiger Einzelteile mittels schwalbenschwanzförmiger, formschlüssiger Elemente. Nach DE-A-17 53 123 sind im oberen Randbereich am Behälter einschwenkbare Griffe angeordnet, die den Behälter tragbar und nach dem Einschwenken der Griffe stapelbar ausbilden. Aus DE-U-90 05 292 ist ein stapelbarer Transportbehälter mit Deckel zur Aufnahme runder oder eckiger Speisenträger bekannt, wo für die am Deckel überstehend angeordneten Tragegriffe eine entsprechende Kerbung im Boden der Transportbehälter vorgesehen ist. Der Transportbehälter ist zu Isolierzwecken doppelwandig ausgeführt und weist zur Sicherung der Speisenträger auf der Bodeninnenseite runde Vertiefungen und in den Eckzonen des Innenraumes schräg angeordnete Führungsleisten auf. Diese haben zur Aufnahme eckiger Speisenträger entsprechende Einkerbungen. Alle bekannten Lösungen gehen davon aus, daß die einzelnen Bestandteile eines Essens getrennt aufbewahrt und transportiert werden. Das Handling dieser Transportbehälter wird aber dadurch eingeschränkt, daß die Speisen aus den Speisenträgern entnommen werden müssen oder eine komplizierte Geometrie im Deckelbereich aufweisen, die den hygienischen Anforderungen an die Säuberung von Lebensmittelbehältnissen nicht gerecht werden.

Der vorliegenden Erfindung liegt daher die Aufgabe zugrunde, einen stapelbaren eckigen Transportbehälter zu entwickeln, der sich durch ein leichtes Handling auszeichnet, ein oder mehrere Speisenträger so aufnehmen kann, daß sie während des Transportes nicht verrutschen, d.h. sowohl vertikal als auch horizontal stapelbar sind, die Speisenträger ein komplettes Essen aufnehmen können und gleichzeitig als Eßgeschirr verwendet werden.

Diese Aufgabe wird durch einen stapelbaren eckigen Transportbehälter gemäß Anspruch 1 gelöst. Der Transportbehälter ist mit einem Grundkörper und einem schlüssig sitzenden Eindrückdeckel ausgestattet, wobei an den Außenwänden des Grundkörpers aus DE-A-34 04 798 bekannte schwalbenschwanzartige Steckverschlüsse angeordnet sind und der Boden des Grundkörpers eine umlaufende Fußleiste aufweist, in der Deckeloberfläche eine passende Aussparung für die Fußleiste eines zweiten Grundkörpers angebracht ist und im Grundkörper ein oder mehrere Speisenträger neben- als auch übereinander stehen, deren Zuoberststehender schlüssig und gemeinsam mit dem Grundkörper durch den Deckel verschlossen wird. Der Deckel weist seitlich angeordnete Vorsprünge auf, die in Aussparungen an der Innenfläche des Grundkörpers einrasten. Die Speisenträger sind aus leichtem Porzellan und asiettenmäßig für die getrennte Aufnahme von z.B.Fleisch, Gemüse und Beilage unterteilt und gleichzeitig das Eßgeschirr. Die Essenbestandteile müssen zum Verzehr also nicht mehr umgefüllt werden. Der so ausgebildete Speisenträger aus Porzellan ist besonders leicht und daher gut geeignet, die bisher üblichen Assietten aus Aluminium völlig zu ersetzen Der mehrfach unterteilte Speisenträger aus Porzellan läßt sich einfach maschinell säubern, vielfach wiederverwenden und verbessert die Tischkultur für vorbereitete Speisen wesentlich. Gleichzeitig wird ein wesentlicher ökologischer Beitrag dadurch geleistet, daß das Sondermüllaufkommen in Form von Aluminium gravierend gemindert werden kann. Zur Vermeidung von Wärme- und Geschmacksverlusten während des Speisentransportes werden die Außen- und Unterteilungskonturen des Speisenträgers auf den Deckel übertragen und entsprechend z.B. 10 mm tief im Deckel ausgespart. Der Deckel sitzt fest auf dem Speisenträger und dem Grundkörper und verhindert so auch, daß Fleisch, Gemüse und Beilagen während des Transportes vermischt werden. Die Verfahrensweise ist übertragbar auf die aus DE-U-90 05 292 bekannte Variante, in der mehrere Speisenträger mit einfacher Geometrie nebeneinander in einem Transportbehälter angeordnet sind. Eine erfindungsgemäße Variante ist der Transport mehrerer Speisenbehälter übereinandergestapelt in einem Transportbehälter. Das wird erreicht, indem anstelle des Deckels die Speisenträger mit einer Eindrückplatte während des Transportes verschlossen werden, wobei die Innenseite der Eindrückplatte analog der Gestaltung des Deckels seitlich angeordnete Vorsprünge und an der Unter- und Oberseite Aussparungen aufweist, wobei die Aussparung in der Oberseite dem Boden des Speisenträgers entspricht. Die Speisenträger sind auf diese Art rutschfest übereinander im Grundkörper angeordnet Der erfindungsgemäße Transportbehälter mit dem Speisenträger aus Porzellan stellt eine wesentliche Verbesserung der Essenversorgung für Großabnehmer dar, da im Vergleich zu den üblichen Assietten die Umweltbelastung erheblich minimiert wird, der Transport aufgrund der Stabilität der Speisenträger sicherer ist und auch das ästhetische Empfinden der Essenteilnehmer befriedigt wird. An Hand der Zeichnungen wird die Erfindung näher erläutert. Dabei zeigen:

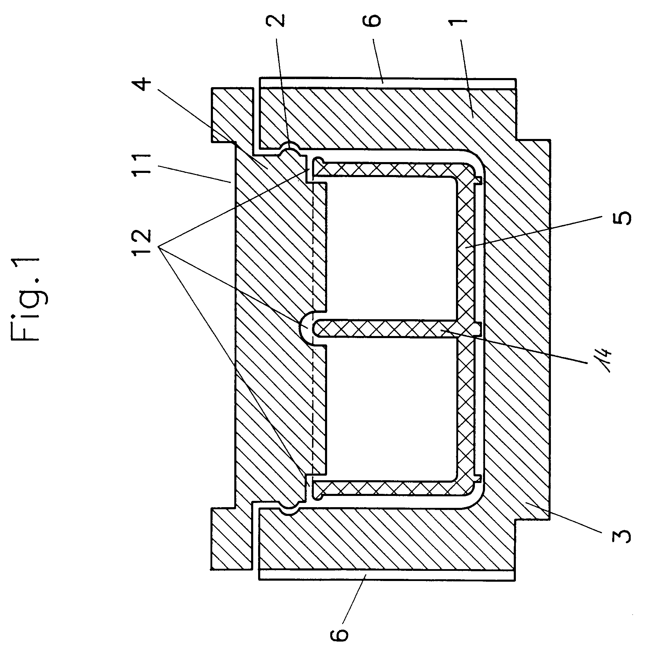

- Fig.1: Seitenansicht mit einem Speisenträger
- Fig.2: Seitenansicht mit mehreren Speisenträgern

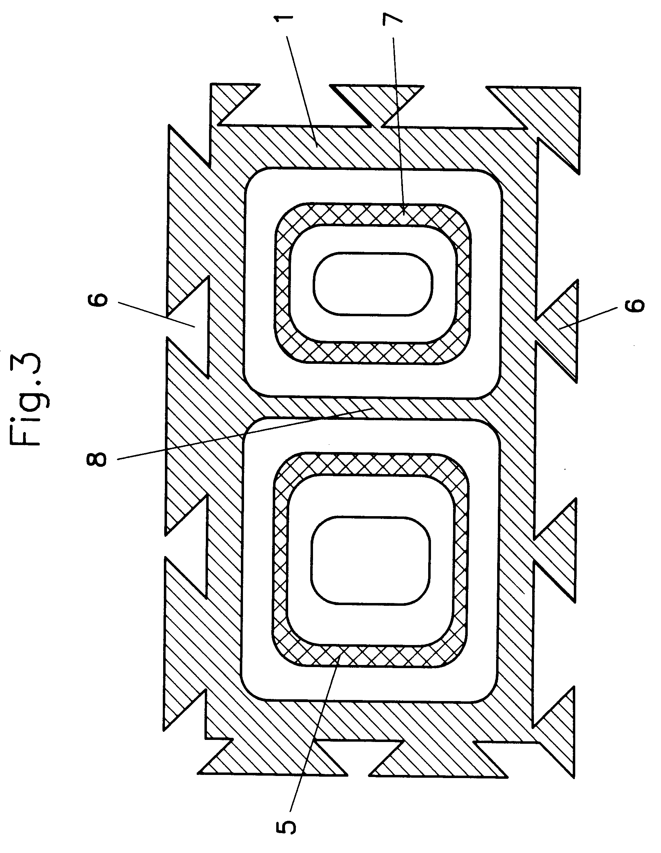

- Fig.3: Draufsicht von Fig.2
- Fig.4: Seitenansicht mit mehreren Speisenträgern übereinander angeordnet.

Der Transportbehälter, vorzugsweise viereckig, besteht aus einem Grundkörper 1 und ist gekennzeichnet durch die Anordnung von an sich bekannten schwalbenschwanzartigen Steckverschlüssen 6 an den Außenflächen und einer umlaufenden Fußleiste 3 am Boden und wird verschlossen mit einem Deckel 4, an dessen Unterseite Aussparungen 12 angebracht sind, die der Kontur und der Anordnung der Stege 14 in Speisenträger 5 entsprechen, und in seiner Außenseite Aussparung 11, zur Aufnahme der umlaufenden Fußleiste 3 eines zweiten Grundkörpers 1, und nicht dargestellte Griffleisten hat. Deckel 4 hat weiterhin seitlich angeordnete Vorsprünge 2, die in Aussparungen einrasten, die an der Innenfläche von Grundkörper 1 angebracht sind.

Die Aussparungen an der Innenfläche des Grundkörpers 1 sind mit Abstand von der Öffnung angebracht, damit gewährleistet wird, daß Deckel 4 beim Einrasten in den Grundkörper 1 auch in die Kontur und die Stege 14 in Speisenträger 5 greift.

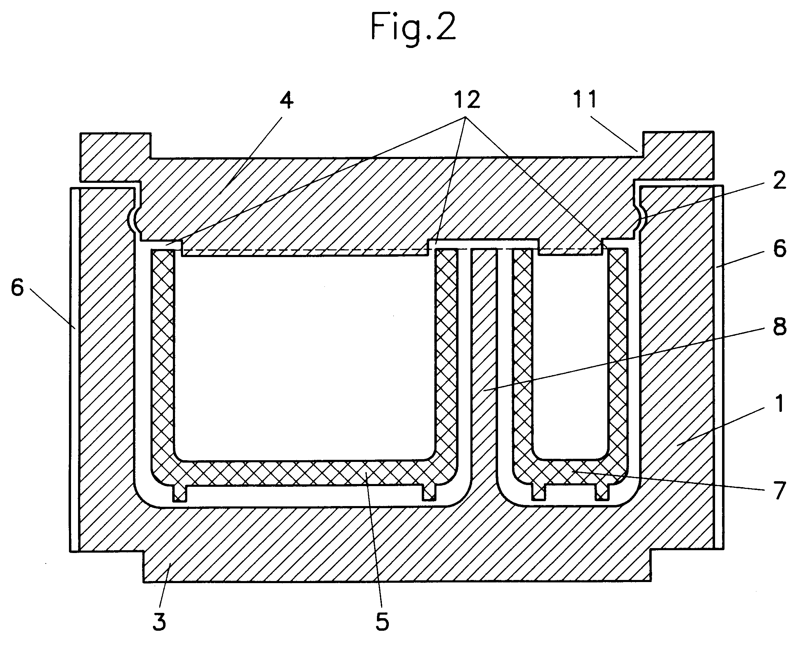

Speisenträger 5 ist durch Stege 14 in Bereiche zur Aufnahme verschiedenartiger Speisenbestandteile unterteilt. Stege 14 sind gleichhoch mit dem Rand des Speisenträgers 5, wie bei unterteilten Speisenträgern allgemein bekannt. Fig.2 zeigt den Besatz des Grundkörpers 1 mit mehreren Speisenträgern, 5 und 7, nebeneinander, wobei die Unterteilung von Speisenträger 5 nicht dargestellt ist. Mit der Anordnung bekannter schwalbenschwanzartiger Steckverschlüsse 6 ist Grundkörper 1 seitlich rutschfest und durch die umlaufende Fußleiste 3, die in Aussparung 11 von Deckel 4 paßt, stapelbar und rutschfest zu transportieren, eine wichtige Voraussetzung für den Transport von vorbereiteten Speisen. Die Speisenträger 5 und 7 sind aus Porzellan und stehen mit ihren Füßen auf dem Innenboden des Grundkörpers 1. Grundkörper 1 umhüllt Speisenträger 5 und 7 eng. Bei der Aufnahme von mehreren Speisenträgern 5 und 7 nebeneinander ist am Innenboden des Grundkörpers 1 in entsprechendem Abstand Trennsteg 8 zwischen den Speisenträgern 5 und 7 angeordnet.

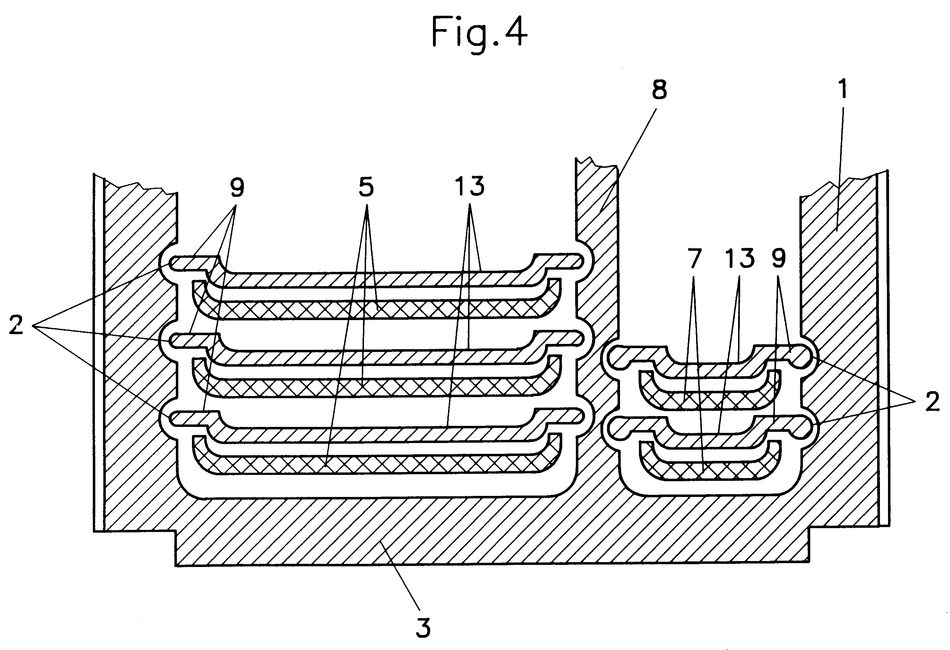

Die der Anordnung der Speisenträger 5 und 7 entsprechenden Aussparungen 12 auf der Innenseite des Deckels 4 sind vorzugsweise so tief und breit, daß der Rand der Speisenträger 5 und 7 und Trennsteg 8 gut und eng umschlossen werden und Deckel 4 leicht abzunehmen ist, z.B. 10 mm tief und 4 mm breit. Eine sehr praktische Variante zum Transport mehrerer Essen gleichzeitig in einem Grundkörper 1 zeigt Fig.4. Die unteren Speisenträger 5 und 7 werden mit je einer Eindrückplatte 9 abgedeckt, auf deren Innenseite analog Deckel 4 nicht dargestellte Aussparungen 12 entsprechend der Unterteilung der Speisenträger 5 angebracht sind und deren Oberfläche eine Aussparung 13 zur Aufnahme eines gleichartigen Speisenträgers hat, der als 2.Besatz bezeichnet wird. Desweiteren sind seitlich an Eindrückplatte 9 Vorsprünge 2 angebracht, die in die entsprechend angeordneten Aussparungen an der Innenfläche des Grundkörpers 1 einrasten. Der 2.Besatz bzw. der letzte Besatz wird gleichzeitig mit dem Grundkörper 1 durch Deckel 4 verschlossen.

Das Material des Grundkörpers 1 ist gesundheitlich unbedenklicher Kunststoff, z.B.EPP, EPE, PUR. Die Speisenträger 5 und 7 sind Transportmittel für vorbereitete Speisen und gleichzeitig Eßgeschirr und außerdem durch die Verwendung von Porzellan mehrfach verwendbar. Ein weiterer Vorteil der Erfindung ist, daß der Transportbehälter mit einem oder mehreren Speisenträgern komplett in der Mikrowelle erwärmbar ist.

## Patentansprüche

1. Stapelbarer eckiger Transportbehälter bestehend aus einem Grundkörper (1) mit einem Deckel (4), wenigstens einem im Inneren des Grundkörpers (1) aufnehmbaren Speisenträger (5) zum Transport vorbereiteter Speisen und einer am Boden des Grundkörpers angeordneten Fußleiste (3), welche in eine Aussparung (11) auf der Oberseite des Deckels (4) eingreifen kann, wobei der Deckel (4) als Eindrückdeckel ausgebildet ist, der an seiner Unterseite Aussparungen (12) aufweist, welche mit dem Speisenträger (5) zusammenwirken und der mit Vorsprüngen (2) versehen ist, welche den Deckel (4) in Aussparungen des Grundkörpers (1) halten
dadurch gekennzeichnet, daß
- die Fußleiste (3) am Boden des Grundkörpers (1) umläuft,
- der Grundkörper (1) an seinen Außenflächen Steckverschlüsse (6) aufweist,
- der oben offene Speisenträger (5) vorzugsweise aus leichtem Porzellan besteht und
- der Deckel (4) mit Griffleisten versehen ist,
wobei die genannten Vorsprünge (2) des Deckels (4) in Aussparungen einrastbar sind, welche an der Innenfläche des Grundkörpers (1) mit Abstand von dessen Öffnung angebracht sind und in der verrasteten Stellung des Deckels (4) die obersten Ränder des Speisentragers (5) bzw. der Speisenträger (5) in die an der Unterseite des Deckels (4) angeordneten Aussparungen (12) eingreifen,
so daß der Transportbehälter wärme- und geruchsisolierend verschlossen ist.

2. Stapelbarer eckiger Transportbehälter gemäß Anspruch 1
dadurch gekennzeichnet, daß
- der Speisenträger (5) durch die Anordnung von Stegen (14) in voneinander getrennte Speisenaufnahmebereiche unterteilt ist, wobei die Stege (14) gleichhoch wie der Rand des Speisenträgers (5) sind.

3. Stapelbarer eckiger Transportbehälter gemäß Anspruch 1 bis 2 dadurch gekennzeichnet, daß
- am Innenboden des Grundkörpers (1) ein Trennsteg (8) so angeordnet ist, daß ein erster Speisenträger (5) und ein zweiter Speisenträger (7) nebeneinander rutschsicher transportiert werden und
- die an der Unterseite und im Innenbereich des Deckels (4) angeordnete Aussparung (12) der Summe aus der Wandstärke des ersten Speisenträgers (5), des zweiten Speisenträgers (7) und des Trennstegs (8) angepaßt ist und der Deckel (4) den Transportbehälter mit mehreren, nebeneinander angeordneteten Speisenträgern wärme- und geruchsisolierend verschließt.

4. Stapelbarer eckiger Transportbehälter gemäß Anspruch 1 bis 2 dadurch gekennzeichnet, daß
- mindestens zwei Speisenträger (5) im Grundkörper (1) übereinander gestapelt transportiert werden, wobei der jeweils untere Speisenträger (5) mit einer Eindrückplatte (9) verschlossen ist, die wie der Deckel (4) mit Vorsprüngen (2), die in Aussparungen einrastbar sind, ausgerüstet ist und an der Oberseite eine Aussparung (13) aufweist, in die der Boden eines oberen Speisenträgers (5) paßt,
- und der oberste Speisenträger (5) und der Grundkörper (1) mit dem Deckel (4) wärme- und geluchsisolierend verschlossen sind.

5. Stapelbarer eckiger Transportbehälter gemäß Anspruch 3 und 4 dadurch gekennzeichnet, daß
- erste und zweite Speisenträger (5,7) im Grundkörper (1) nebeneinander und gleichzeitig jeweils mindestens zwei Speisenträger (5,7) übereinander stehen, wobei wenigstens eine Eindrückplatte (9) übereinander angeordnete Speisenträger (5,7) gegeneinander wärme- und geruchsisolierend verschließt,
- und die obersten Speisenträger (5,7) und der Grundkörper (1) mit dem Deckel (4) wärme- und geruchsisolierend verschlossen sind.

## Claims

1. Stackable angular transport container consisting of a body (1) with a cover (4), at least one foodbox (5) capable of being accomodated in the interior of the body (1) to transport previously prepared food, and a base batten (3) arranged at the bottom of the body, which can engage with an indentation (11) on the top of the cover (4) with the said cover (4) designed as a press cover, which has indentations (12) at its bottom which interact with the foodbox (5), and projections (2) holding the cover (4) in indentations of the body (1),
characterized in that
- the base batten (3) runs around the bottom of the body (1),
- the body (1) has plug-in locks (6) on its outer surfaces,
- the foodbox (5) being open on top is preferably of a light china, and
- the cover (4) is provided with handle bars,
whereby the said projections (2) of the cover (4) can engage with indentations provided on the inner surface of the body (1) with a distance from its opening, and in the engaged position of the cover (4), the highest rims of the foodbox (5) or the foodbox (5) engage with the indentations (12) on the bottom of the cover (4) so that the transport container is closed heat- and odour-insulatedly.

2. Stackable angular transport container according to claim 1, characterized in that
- the foodbox (5) is divided into food reception areas separated from each other by an arrangement of lands (14) with a height equal to that of the rim of the foodbox (5).

3. Stackable angular transport container according to claims 1 to 2, characterized in that
- on the inner bottom of the body (1) there is a separating land (8) arranged such that a first foodbox (5) and a second foodbox (7) are transported side by side in a non-skidding way, and
- the indentation (12) provided on the bottom and interior surface of the cover (4) is adapted to the sum of the wall thicknesses of the first foodbox (5), second foodbox (7) and separating land (8), and the cover (4) heat- and odour-insulatingly closes the transport container with several foodboxes arranged side by side.

4. Stackable angular transport container according to claims 1 to 2, characterized in that
- in the body (1) at least two foodboxes (5) are transported on top of each other with the lower foodbox (5) closed by means of a press cover (9), which similar to the cover (4) is provided with projections (2) which can engage with indentations, and has on the top an indentation (13) with which the bottom of an upper foodbox (5) matches, and
- the uppermost foodbox (5) and the body (1) are heat- and odour-insulatingly closed by means of the cover (4).

5. Stackable angular transport container according to claims 3 and 4, characterized in that
- in the body (1) first and second foodboxes (5, 7) are side by side and, in the same time, at least two foodboxes (5, 7) are on top of each other, whereby at least one press cover (9) heat- and odour-insulatingly closes foodboxes (5, 7) arranged on top of each other, and
- the uppermost foodboxes (5, 7) and the body (1) are closed heat- and odour-insulatedly by means of the cover (4).

## Revendications

1. Il s'agit d'un réceptacle de transport anguleux empilable constitué d'un corps de base (1) garni d'un couvercle (4), et au minimum d'un porte-plat (5) insérable à l'intérieur du corps de base (1) en vue du transport de plats préparés ainsi qu'une baguette disposée sur le fond du corps de base (3), qui peut s'engrener dans une encoche (11) pratiquée sur la surface du couvercle (4) lorsque le couvercle (4) a la forme d'un couvercle d'impression possèdant des encoches (12) sur son dessous et que celles-ci sont solidaires du porte-plat (5) garni de rebords (2). Ces rebords soutiennent le couvercle (4) dans les encoches du corps de base (1).
Ceci est caractérisé par le fait que:
- la baguette (3) sur le fond du corps de base (1) circule tout le long de celui-ci
- le corps de base (1) est garni de fiches d'obturation (6) sur ses surfaces extérieures
- le porte-plat supérieur (5) est en porcelaine légère de préférence
- le couvercle (4) est garni de poignées. À cet effet les sus-mentionnés rebords (2) du couvercle (4) sont encliquetables dans les encoches qui se trouvent portées sur la surface intérieure du corps de base (1) à une certaine distance de l'ouverture de celui-ci et, lorsque le couvercle (4) est enclenché, les bords supérieurs du porte-plat ou des porte-plats (5) s'engrènent dans les encoches aménagées (12) sur la face inférieure du couvercle (4). De cette manière le réceptacle de transport permet une isolation thermique et olfactive.

2. Un réceptacle de transport anguleux empilable en vertu de la spécification **N°1** est caractérisé par le fait que:
- le porte-plat (5) est subdivisé en conteneurs de nourriture séparés les uns des autres par l'installation d'entretoises (14). À cet effet les entretoises (14) sont aussi hautes que le bord du porte-plat (5).

3. Un réceptacle de transport anguleux empilable en vertu des spécifications **N°1 à 2** est caractérisé par le fait que:
- sur le fond intérieur du corps de base (1) est disposée une entretoise de séparation de manière à ce qu'un premier (5) et un second porte-plat (7) puissent être transportés sans risquer de glisser.
- l'encoche (12) pratiquée sur la face inférieure et l'espace intérieur du couvercle (4) est adaptée à la somme de l'épaisseur de la cloison du premier porte-plat (5), du second porte-plat (7) et de l'entretoise de séparation (8) et que le couvercle (4) isole thermiquement et olfactivement le réceptacle de transport avec plusieurs porte-plats disposés l'un à côté de l'autre.

4. Un réceptacle de transport anguleux empilable en vertu des spécifications **N°1 à 2** est caractérisé par le fait que:
- deux porte-plats (5) au minimum peuvent être transportés l'un au dessus de l'autre dans le corps de base (1). À cet effet chaque porte-plat inférieur (5) peut être fermée par une plaque d'impression (9) garnie de rebords (12) comme le couvercle (4) et peut s'engrener dans des encoches. Cette plaque possède sur sa surface un encoche (13) dans laquelle peut glisser le fond d'un porte-plat situé au dessus (5). Le porte-plat supérieur (5) et le corps de base (1) et le couvercle sont isolés thermiquement et olfactivement.

5. Un réceptacle de transport anguleux empilable en vertu des spécifications **N°3 à 4** est caractérisé par le fait que:
- le premier et le deuxième porte-plat (5 et 7) sont disposés dans le corps de base l'un à côté de l'autre et qu'en même temps à chaque fois au minimum deux porte-plats sont disposés l'un au dessus de l'autre (5,7). À cet effet au moins une plaque d'impression (9) garantie une isolation thermique et olfactive à tous les porte-plats disposés l'un au dessus de l'autre (5,7).
- les porte-plats supérieurs (5,7) ainsi que le corps de base (1) sont isolés thermiquement et olfactivement par un couvercle (4).
